(19) Europäisches Patentamt
European Patent Office
Office européen des brevets

(11) EP 0 592 902 B1

(12) EUROPÄISCHE PATENTSCHRIFT

(45) Veröffentlichungstag und Bekanntmachung des Hinweises auf die Patenterteilung:
17.12.1997 Patentblatt 1997/51

(51) Int Cl.⁶: **G02B 26/02**, G02B 6/28

(21) Anmeldenummer: 93115937.0

(22) Anmeldetag: 02.10.1993

(54) **Optisches Bauelement mit veränderlichen Durchlasseigenschaften für Licht**

Optical device having variable light transmission

Dispositif optique avec une transmission lumineuse variable

(84) Benannte Vertragsstaaten:
DE FR GB IT SE

(30) Priorität: 05.10.1992 DE 4233489

(43) Veröffentlichungstag der Anmeldung:
20.04.1994 Patentblatt 1994/16

(73) Patentinhaber: ALCATEL ALSTHOM COMPAGNIE GENERALE D'ELECTRICITE
75008 Paris (FR)

(72) Erfinder:
• Heitmann, Walter, Dr.
D-64401 Gross-Biberau (DE)
• Stenger, Heinrich
D-81245 München (DE)

(74) Vertreter: Döring, Roger, Dipl.-Ing. et al
Alcatel Kabel Beteiligungs-AG,
Kabelkamp 20
30179 Hannover (DE)

(56) Entgegenhaltungen:
DE-A- 2 803 489          DE-A- 2 842 535
DE-A- 2 851 654          GB-A- 1 594 336
GB-A- 2 115 947          US-A- 3 338 656

• PATENT ABSTRACTS OF JAPAN vol. 9, no. 292 (P-406) 1985 & JP-A-60 129 723 (CANON K K)
• APPLIED OPTICS., Bd.19, Nr.1, Januar 1980, NEW YORK US Seiten 113 - 117 SPILLMAN ET AL.
• PROCEEDINGS OF THE SPIE - THE INTERNATIONAL SOCIETY FOR OPTICAL ENGINEERING, Bd.374, 1983, BELLINGHAM, US Seiten 206 - 207 PALMER A W ET AL.

**Beschreibung**

Die Erfindung bezieht sich auf ein optisches Bauelement für die Beeinflussung von Durchlaßeigenschaften von Licht, mit mindestens zwei durch Lichtwellenleiter, die aus einer Glasfaser und einem dieselbe umgebenden Mantel bestehen, gebildeten Endabschnitten, wobei mindestens ein Endabschnitt zwischen zwei Endstellungen bewegbar ist, wobei in einer Endstellung die beiden Endabschnitte optisch gekoppelt und in der anderen Endstellung optisch entkoppelt sind, bei welchem die Endabschnitte einander zugewandte Schrägflächen mit einem Winkel der Flächennormalen zur Achse der Glasfasern aufweisen, der den Grenzwinkel der Totalreflexion überschreitet und bei welchem der Stellweg des beweglichen Endabschnitts erheblich kleiner als der Durchmesser der Glasfaser ist.

Ein optisches Bauelement mit Schaltfunktion geht aus der DE-A-3 644 802 hervor. In diesem Bauelement werden auf der gleichen Achse liegende Lichtwellenleiter-Endabschnitte radial gegeneinander bewegt, so daß im Koppelzustand Licht von einem Endabschnitt in den anderen übertreten kann, während im entkoppelten Zustand der Lichtdurchtritt gesperrt ist. Beim Umschalten muß ein erheblicher Verschiebeweg durchfahren werden, der praktisch der Stärke der Kernzone der Lichtwellenleiter entspricht. Bereits aufgrund dieses Verschiebewegs ergeben sich hohe Schaltzeiten.

Um die Schaltzeiten zu reduzieren, können rasch arbeitende Bewegungselemente verwendet werden. Diese erfordern jedoch relativ große Betriebsströme, einen vergleichsweise großen Raumbedarf und insgesamt hohe Herstellkosten. Derartige Schalter sind für den Aufbau optischer Netze nur für relativ langsame Schaltvorgänge geeignet.

Ein optisches Bauelement für das Schalten optischer Leistung von Lichtwellenleitern, das nach einem anderen Prinzip arbeitet, ist beispielsweise aus dem DE-Buch "Optische Telekommunikationssysteme, Band I: Physik und Technik", Herausgeber: W. Haist, Damm-Verlag KG, Gelsenkirchen-Buer, bekannt geworden. Auf den Seiten 105 und 106 sind schaltbare Lichtkoppler beschrieben, die in integriert-optischer Bauweise arbeiten. Hiermit lassen sich sehr kurze Schaltzeiten erreichen. Allerdings ist eine Ankopplung der Lichtwellenleiter an den Ein- und Ausgang von planaren Strukturen erforderlich, was aufgrund der unterschiedlichen Feldverteilungen hohe Verluste an den Übergängen bedingt. Nachteilig ist ferner, daß bei der Verbindung mechanische Toleranzen im Bereich unter 1 μm eingehalten werden müssen. Hierdurch entstehen hohe Kosten. Darüber hinaus weisen die planaren Wellenleiter selbst vergleichsweise hohe Dämpfungswerte auf, so daß Durchgangsverluste eines optischen Schalters von weniger als 3 dB kaum realisierbar sein dürften. Darüber hinaus sind bei Schaltelementen in integriert-optischer Bauweise die Wellenlängen- und Polarisationsabhängigkeit sowie die unzureichende Nebensprechdämpfung nachteilig, insbesondere bei Anwendungen im Ortsnetz bei Analogübertragung.

Ein optisches Bauelement, wie es eingangs beschrieben ist, geht aus dem Patent Abstract von JP-A-6 01 29 723 hervor. Bei diesem bekannten Bauelement wird zur Verstellung des bewegbaren Lichtwellenleiters ein Heizelement eingesetzt, so daß sich quasi ein Thermoschalter ergibt. Eine Schaltfunktion tritt ein, wenn das Heizelement entweder ausreichend erwärmt oder beim umgekehrten Schaltvorgang wieder ausreichend abgekühlt ist. Dabei wird der eine Lichtwellenleiter in axialer Richtung bewegt.

Der Erfindung liegt die Aufgabe zugrunde, das eingangs geschilderte optische Bauelement derart weiterzubilden, daß es hinsichtlich der Durchgangsdämpfung, der Sperrdämpfung, der Rückflußdämpfung, des Nebensprechens, der Schaltzeiten, der Herstellkosten und/oder der Abmessungen gegenüber den bekannten optischen Bauelementen verbessert ist und daß es insbesondere für den Einsatz im Teilnehmeranschlußbereich von Fernmeldenetzen geeignet ist und insofern den Anforderungen an einen idealen Schalter möglichst nahe kommt.

Diese Aufgabe wird gemäß der Erfindung dadurch gelöst,

- daß zumindest am bewegbaren Endabschnitt im Bereich des beweglichen Endes desselben der Mantel des Lichtwellenleiters teilweise entfernt ist und
- daß die Verstellung des bewegbaren Endabschnitts quer zur Achse des Lichtwellenleiters erfolgt und durch ein piezoelektrisches Stellelement bewirkt wird.

Bereits ein sehr geringer Stellweg erlaubt die erwünschte Schalt- oder Modulatorfunktion. Der Stellweg ist beispielsweise um etwa zwei Größenordnungen geringer als bei dem gattungsgemäßen Stand der Technik. Trotzdem ist das Verhältnis zwischen Durchlaß- und Sperrdämpfung nicht verschlechtert. Besonders günstig ist die durch den kleinen Stellweg mögliche hohe Arbeitsfrequenz des optischen Bauelements. Obwohl mechanisch bewegte Teile vorliegen, lassen die vorgenommenen Berechnungen die überraschend hohe Grenzfrequenz von etwa 100 MHz erwarten.

Die beiden einander gegenüberliegenden Endabschnitte sind gegenüber der optischen Achse derart schräg, daß eine Totalreflexion vorliegt. Bei der Trennung der Endabschnitte voneinander wird also das zugeführte Licht vollständig reflektiert. Diese Reflexion erfolgt zwar vollständig und verlustfrei. Ein kleiner Anteil des elektromagnetischen Feldes dringt jedoch in Form einer exponentiell abklingenden Welle in das optisch dünnere Medium ein.

Wie es beispielweise in dem DE-Buch "Optik", Dr. Max Born, Springer Verlag, Berlin 1965, Seite 41, erläutert ist, läßt sich die Eindringtiefe der Feldamplitude A nach folgender Formel berechnen:

$$A = e^{-2\pi z/\lambda_2}.$$

Dabei sind $z$ der Abstand von der Grenzfläche und $\lambda_2$ die Wellenlänge im optisch dünneren Medium. Die Dämpfung der optischen Leistung entspricht dem Quadrat der Feldamplitude A. Somit kann für den Abstand einer Wellenlänge, also bei Licht etwa von 1,5 μm, ein Wert von -55 dB errechnet werden. Wenn somit einander zugewandte schräge Flächen der einander gegenüberliegenden Endabschnitte sich bis auf 1,5 μm aneinander annähern, findet praktisch noch keine Einkopplung von Licht in den zweiten Endabschnitt statt. Wenn jedoch die Annäherung weiter vorgenommen wird, bis ein optischer Kontakt vorliegt, erfolgt - zumindest nach der Theorie - ein verlustfreier Durchgang der Strahlung.

Bei der Anwendung im Teilnehmeranschlußbereich ist es günstig, daß die Herstellkosten des optischen Bauelements, das bevorzugt als Schalter verwendet werden kann, sehr gering sind. Insbesondere können aufwendige Anpassungsmaßnahmen wie bei integriert-optischen Lichtkopplern entfallen. Zudem sind die baulichen Abmessungen klein. Durch den Einsatz des piezoelektrischen Stellelements ergibt sich aufgrund der geringen erforderlichen Größe und bei der möglichen kompakten Bauweise auch eine gute Erschütterungsfestigkeit.

Der günstigste Winkel der Schrägfläche gegenüber der optischen Achse der Lichtwellenleiter kann experimentell bestimmt werden. Die Flächennormale der Schrägfläche weist jedenfalls einen Winkel zur optischen Achse auf, der den Grenzwinkel der Totalreflexion überschreitet. Der Grenzwinkel $\phi_0$ der Totalreflexion kann bekanntlich zu

$$\sin \phi_0 = n_2/n_1$$

bestimmt werden, wobei $n_1$ die Brechzahl im optisch dichteren und $n_2$ die Brechzahl im optisch dünneren Medium ist, die bei einer Gasatmosphäre als 1 angenommen werden kann. Bei Brechzahlen für Quarzglas, das rein oder leicht dotiert sein kann, ergeben sich Werte zwischen 1,44 und 1,46 für $n_1$ im Wellenlängenbereich von 1,2 bis 1,7 μm, so daß hierfür der Grenzwinkel der Totalreflexion zwischen 43° und 44° angenommen werden kann. Dementsprechend kann bevorzugt der Winkel der Schrägfläche zu 45° gewählt werden, so daß mit einem gewissen Sicherheitsabstand Totalreflexion vorliegt.

Besonders günstig ist es in diesem Zusammenhang, wenn sich beim Polieren eine leicht ballige Ausgestaltung der Schrägflächen ergibt, die den optischen Kontakt der für die Durchlaßdämpfung relevanten Mitte des Lichtwellenleiters begünstigt.

Der äußere Mantel des Lichtwellenleiters wird im Bereich der Endabschnitte zweckmäßig erst dann entfernt, wenn die Schrägflächen fertig poliert sind. Wenn eine Quarzglasfaser von 125 μm Durchmesser verwendet wird, kann der Mantel in seiner Längsrichtung z. B. über mindestens etwa 0,5 mm entfernt sein, wobei aber auch eine Strecke von 1 mm noch nicht zu Unstabilitäten führt.

Gemäß einer vorteilhaften Ausgestaltung ist es vorgesehen, daß das piezoelektrische Stellelement direkt mit den gegeneinander beweglichen Endabschnitten verbunden ist. Temperatureinflüsse können so möglichst gering gehalten werden, wobei zudem günstig ist, daß bei Verwendung eines aus Quarz bestehenden piezoelektrischen Kristalls etwa die gleichen thermischen Ausdehnungskoeffizienten wie bei aus Quarzglas bestehenden Lichtwellenleitern vorliegen.

Die Montage des Stellelements entscheidet darüber, ob in spannungsfreiem Zustand ein Durchlaß oder eine Sperrung vorliegt. Erfolgt die Montage in Anlage der Schrägflächen aneinander, entsteht ein Ruhekontakt, während bei Verwendung einer Zwischenlage das optische Bauelement wie ein Arbeitskontakt eines Schalters wirkt. Um eine Auslenkung in beide Richtungen symmetrisch zu ermöglichen, kann auch eine Zwischenlage von 0,75 μm verwendet werden, so daß bei einer Bewegung in einer Richtung um 750 nm eine Anlage und bei Auslenkung in der umgekehrt gepolten Richtung ein Abstand von 1500 nm entsteht. Diese insofern symmetrische Auslenkmöglichkeit für das Stellelement ist bei der Verwendung des optischen Bauelements als Modulator bevorzugt. Günstig sind hier die geringen Montagekosten, da aufgrund der Anlage kein besonderer Abstandsabgleich erforderlich ist.

Gemäß einer weiteren Ausgestaltung ist es vorgesehen, den Strahlung aussendenden Endabschnitt, der hier als erster Endabschnitt bezeichnet wird, mit einem dritten Endabschnitt zu verbinden, der sich von seinem Ende quer weg erstreckt. Bei einem Schnittwinkel der Schrägfläche von 45° kann sich dieser Endabschnitt im Winkel von 90° seitlich wegerstrecken, so daß bei Sperrung des optischen Bauelements die von der Schrägfläche des ersten Endabschnitts total reflektierte Strahlung in den dritten Endabschnitt eintritt, der somit bevorzugt in der optischen Achse der reflektierten Strahlung angebracht ist. Nachdem im Falle der Anlage der Schrägflächen des ersten und zweiten Endabschnitts aneinander keine oder nahezu keine Strahlung reflektiert wird, läßt sich auf diese Weise ein Umschalter realisieren.

Besonders günstig ist es in diesem Zusammenhang, wenn der dritte Endabschnitt sich in gutem optischen Kontakt mit der Glasfaser des ersten Endabschnittes befindet. Hierzu wird bevorzugt der größte Teil des Mantels an dem spitz zulaufenden Ende des ersten Endabschnittes abgetragen, wobei es gemäß einer Ausgestaltung sogar vorgesehen ist, das Ende des dritten Endabschnittes konkav auszuformen, so daß es die Quarzglasfaser der ersten Endabschnitte unmittelbar einseitig umgibt. In an sich bekannter Weise sollte ein etwa verwendeter Kleber im wesentlichen die gleiche Brechzahl aufweisen, so daß die Verluste an der Übergangsstelle minimal sind.

In dem drei Endabschnitte aufweisenden und somit einen Umschalter bildenden optischen Bauelement ist bevorzugt der zweite Endabschnitt beweglich gelagert. Es ist jedoch auch möglich, an dem zweiten Endabschnitt einen vierten Endabschnitt anzubringen, der in seiner Ausgestaltung im wesentlichen dem an dem ersten Endabschnitt angebrachten dritten Endabschnitt entspricht. Hierdurch ergibt sich ein symmetrisch aufgebauter bidirektionaler Schalter, der durch ein piezoelektrisches Stellelement schaltbar ist. Bei dieser Ausgestaltung ist jedoch aufgrund der vergrößerten zu bewegenden Masse eine Verwendung eines zweiten piezoelektrischen Stellelements günstig. Während im optischen Kontakt zwischen den Schrägflächen der Endabschnitte Lichtleistung zwischen dem ersten und dem zweiten oder dem zweiten und dem ersten Endabschnitt durchgeleitet werden kann, kann im Sperrzustand die eingeleitete Lichtleistung vom ersten in den dritten und/ oder vom zweiten in den vierten Endabschnitt eintreten.

Weitere Einzelheiten, Vorteile und Merkmale der Erfindung ergeben sich aus der nachstehenden Beschreibung mehrerer Ausführungsbeispiele der Erfindung anhand der Zeichnungen.

Es zeigen:

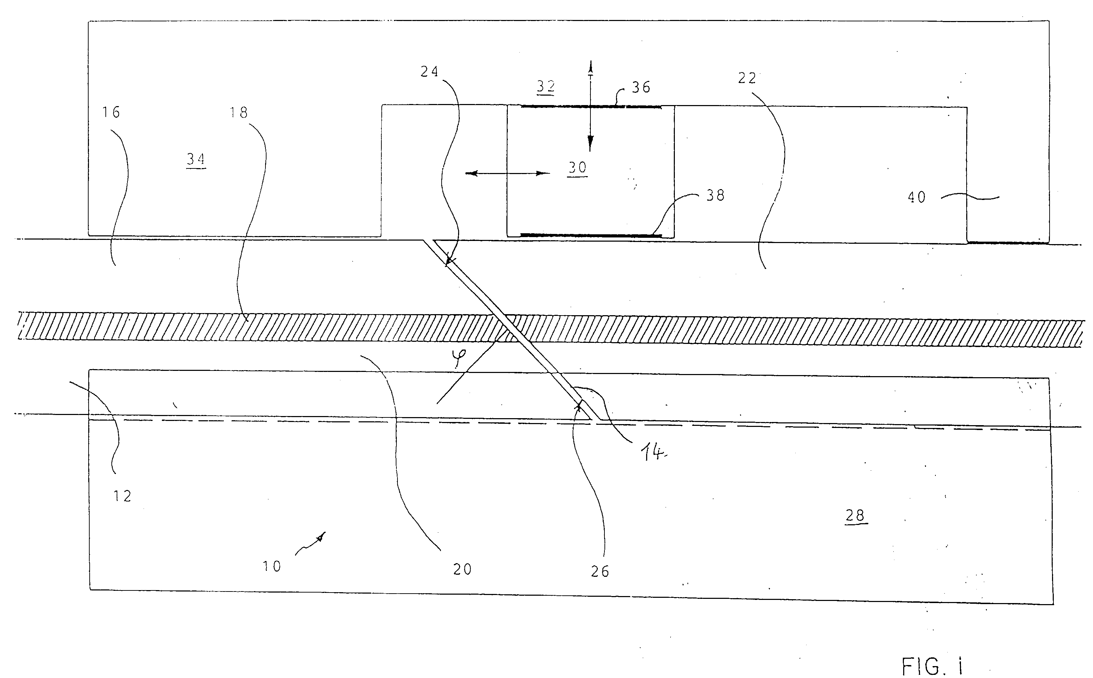

Fig. 1 eine Ausführungsform eines erfindungsgemäßen optischen Bauelements mit einem ersten und einem zweiten Endabschnitt.

Fig. 2 eine Ausgestaltung des optischen Bauelements, wobei dem ersten Endabschnitt ein dritter Endabschnitt zugefügt ist.

Fig. 3 eine Abwandlung der Ausführungsform gemäß Fig. 2.

Fig. 4 eine weitere Ausführungsform eines optischen Bauelements mit vier Endabschnitten.

Fig.5 eine weitere Ausführungsform eines erfindungsgemäßen optischen Bauelements, bei welchem ein Umschalten zwischen mehreren Lichtwellenleitern und ein Multiplex betrieb möglich ist.

Ein optisches Bauelement 10 weist einen Lichtwellenleiter 12 auf, der mit einem Gehrungsschnitt 14 geteilt ist. Der Lichtwellenleiter 12 hat einen Mantel 16 und eine Kernzone oder Quarzglasfaser 18. Aufgrund des Gehrungsschnitts 14 ist der Lichtwellenleiter 12 in einen ersten Endabschnitt 20 und einen zweiten Endabschnitt 22 geteilt, wobei der erste Endabschnitt 20 eine erste Schrägfläche 24 und der zweite Endabschnitt eine zweite Schrägfläche 26 aufweisen, die einander zugewandt sind. Der Schnittwinkel des Gehrungsschnitts 14 beträgt etwa 45°. Die Schrägflächen 24 und 26 sind je abgeschliffen bzw. poliert, um mindestens im Bereich der Quarzglasfaser 18 eine Oberfläche mit geringer Rauhtiefe zu erzielen. Unterhalb der Endabschnitte 20 und 22 ist ein Haltekörper 28 vorgesehen, der oben eine V-Nut aufweist. Die V-Nut dient als Führungselement und Justierhilfe für die Endabschnitte 20 und 22.

In diesem Ausführungsbeispiel erfolgt die Montage so, daß im Ruhezustand die Schrägflächen 24 und 26 einen Abstand von 2 µm haben. Die beiden Endabschnitte 20 und 22 werden in einem schutzgasgefüllten Gehäuse montiert. Der zweite Endabschnitt 22 kann relativ zu dem ersten Endabschnitt 20 bewegt werden, um hierdurch eine Schalt- oder Modulatorfunktion zu erzielen. Hierzu ist in dem dargestellten Ausführungsbeispiel ein piezoelektrisches Stellelement 30 als piezoelektrischer Kristall ausgebildet. Der piezoelektrische Kristall ist an einem Haltekörper 32 befestigt, der mit einem Anlageschenkel 34 an dem ersten Endabschnitt 20 anliegt.

Das Stellelement 30 weist zwei einander gegenüberliegende Elektroden 36 und 38 auf, die bevorzugt eine Dickenänderung des piezoelektrischen Stellelements 30 bewirken. Durch die Dickenänderung des piezoelektrischen Stellelements 30 wird der zweite Endabschnitt 22 in radialer Richtung bewegt. Der Stellweg ist so klein, daß stets im unteren Bereich der elastischen Verformung gearbeitet werden kann.

In dem dargestellten Ausführungsbeispiel ist der Haltekörper 32 bügelförmig ausgebildet, so daß er neben dem Anlageschenkel 34 einen weiteren Anlageschenkel 40 für die Anlage an einem beabstandeten Bereich des zweiten Endabschnittes 22 aufweist.

Die Schrägflächen 24 und 26 sind plan. Eine Ebenheit von weniger als 5 nm läßt sich in der Praxis ohne weiteres realisieren. Damit dürfte es auch in großtechnischem Maßstab keine Probleme bereiten, eine Ebenheit von weniger als 10 nm sicherzustellen, so daß die Durchlaßdämpfung die gewünschten Werte einzuhalten vermag.

Die Verwendung eines mit Stickstoff oder Edelgas als Schutzgas gefüllten Gehäuses ist in diesem Zusammenhang besonders günstig, um die Schrägflächen 24 und 26 vor Verschmutzung oder chemischen Veränderungen durch Wasserdampf oder andere aggressiv wirkende Stoffe zu schützen. Beispielsweise kann ein Quarzglasröhrchen als Gehäuse verwendet werden, wobei die elektrischen Zuleitungen endseitig herausgeführt werden können. Die Abmessungen eines derartigen Quarzglasröhrchens würden etwa denen eines üblichen Schmelzkopplers entsprechen.

In an sich bekannter Weise könnten die Schrägflächen 24 und 26 leicht konvex poliert werden. Die Krümmungsradien können hierbei jedoch erheblich größer sein, als es bei optischen Steckern bekannt geworden ist. Für das optische Bauelement ist es besonders günstig, daß die bewegte Masse recht gering ist, wie auch, daß der erforderliche Verschiebeweg lediglich 1 - 2 µm beträgt. Wenn bei einer Quarzglasfaser ein Durchmesser von 125 µm, eine Dichte 2,2 g/cm$^3$ angenommen wird und die Quarzglasfaser über eine Länge von 1 mm bewegt wird, ergibt sich eine zu bewegende Masse von 30 µg. Andererseits sind piezoelektrische Schwingquarze bekannt, bei denen bei einer Elektrodenfläche von einem Quadratmillimeter und einer Schichtdicke von 1 µm Gold als Elektrodenmaterial verwendet wird. Aufgrund der Dichte von 19,3 g/cm³ ergibt sich bei einer Goldelektrode eine Masse von 20 µg. Sie liegt also in der gleichen Größenordnung wie die zu bewegende Masse des optischen Bauelements. Derartige Schwingquarze können ohne weiteres mit Frequenzen bis zu 150 MHz angeregt werden.

Dementsprechend ist davon auszugehen, daß durch die Ankopplung des beweglichen Endabschnitts 22 die Schwingfrequenz nicht wesentlich vermindert wird. Schaltzeiten von bis etwa 10 ns müßten somit möglich sein, so daß das optische Bauelement auch als Modulator für Frequenzen bis zu etwa 100 MHz eingesetzt werden kann. Der Mantel 16 ist im Bewegungsbereich zumindest teilweise abgetragen. Dadurch kann das Stellelement 30 näher an dem Kernbereich 18 angebracht werden und die zu bewegende Masse wird verringert.

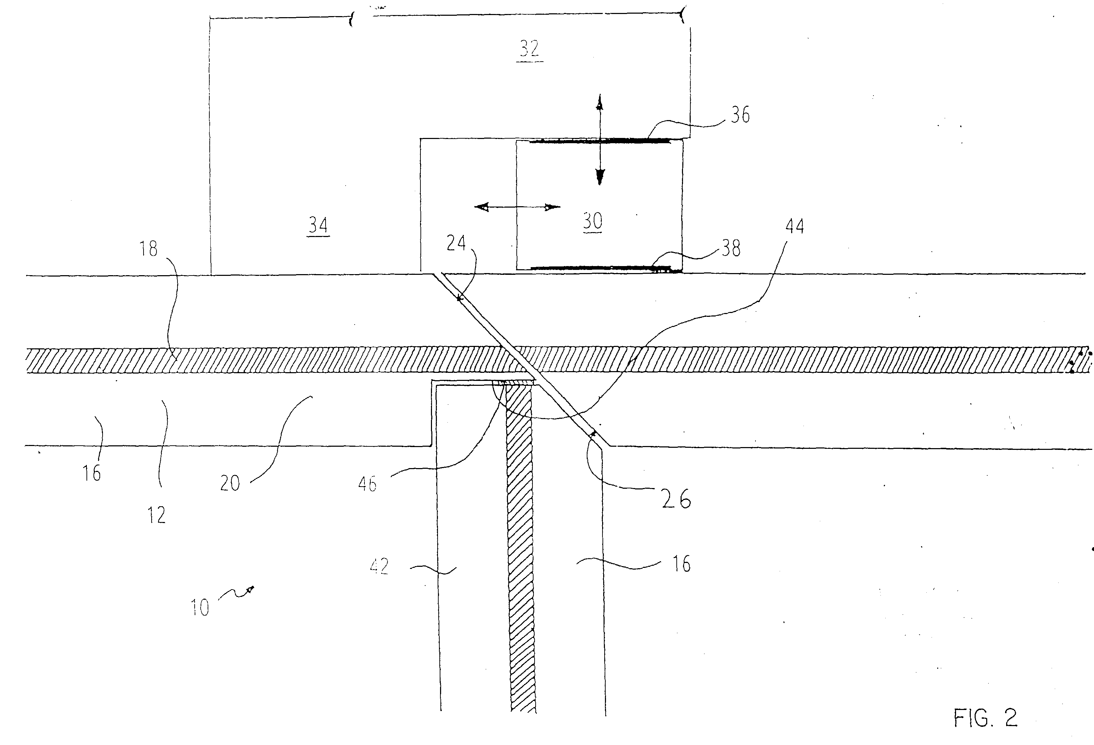

Eine weitere Ausgestaltung des optischen Bauelements 10 ist aus Fig. 2 ersichtlich. Bei dieser Ausführungsform ist neben dem ersten Endabschnitt 20 und dem zweiten Endabschnitt 22 ein dritter Endabschnitt 42 vorgesehen, der optisch mit dem ersten Endabschnitt 20 gekoppelt ist. Hierzu ist der Mantel 16 an dem spitz zulaufenden Ende des ersten Endabschnittes 20 abgetragen. An dieser Stelle endet der dritte Endabschnitt 42 mit einer Planfläche 44. In den ersten Endabschnitt 20 von links eintretende Strahlung wird an der ersten Schrägfläche 24 im gesperrten Zustand des optischen Bauelements 10 reflektiert. Sie tritt dann unmittelbar in den Kernbereich des dritten Endabschnittes 42 ein. Ein Bereich der Mantelfläche 16 verbleibt angrenzend an die Kernzone 18 des ersten Endabschnittes 20. Dadurch können die Strahlungsverluste im Durchlaßzustand gering gehalten werden. Die verbleibende Stärke des Mantels 16 kann beispielsweise einige Mikrometer betragen.

Das den ersten Endabschnitt 20 durchlaufende Strahlenbündel erfährt aufgrund der Brechzahlverteilung eine leichte Bündelung, da die Brechzahlverteilung die Wirkung einer schwachen Zylinderlinse hat. Diese Strahlverformung ergibt kleine Ankopplungsverluste für den dritten Endabschnitt 42. Durch Zwischenschalten eines Koppelgliedes 46 mit entsprechender Brechzahlverteilung zur Kompensation der Brechzahlverteilung des Lichtwellenleiters 12 können diese Verluste verringert werden. Das Koppelglied 46 kann hierbei entweder auf der Planfläche 44 des dritten Endabschnittes 42 angebracht sein oder auf der angeschliffenen Fläche des Endabschnittes 20. Während im Durchlaßzustand die gesamte Lichtleistung vom Endabschnitt 20 in den Endabschnitt 22 eintritt, tritt im Sperrzustand nahezu die gesamte Lichtleistung von dem Endabschnitt 20 in den dritten Endabschnitt 42 ein.

In dem in Fig. 2 dargestellten Ausführungsbeispiel ist der Haltekörper 32 L-förmig ausgebildet, wobei auf eine stabile Relativabstützung zwischen dem ersten Endabschnitt 20 und dem zweiten Endabschnitt 22 geachtet wird. Der Anlageschenkel 34 ist mit einem geeigneten Kleber fest mit dem ersten Endabschnitt 20 verbunden. Der Haltekörper 32 besteht aus Quarzglas und verbindet über die beiden Elektroden 36 und 38 des Stellelementes 30 die Endabschnitte 20 und 22 miteinander.

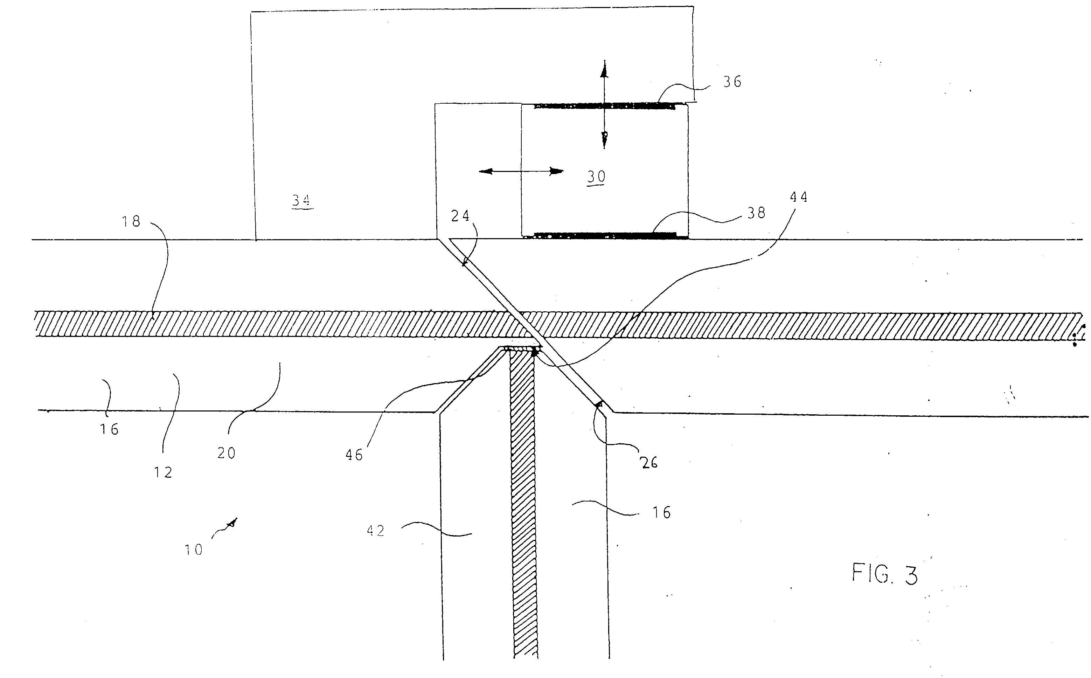

Eine weitere Ausgestaltung des optischen Bauelementes 10 ist aus Fig. 3 ersichtlich. Dieses Ausführungsbeispiel unterscheidet sich von dem in Fig. 2 dargestellten Ausführungsbeispiel im wesentlichen durch die Ausgestaltung des dritten Endabschnittes 42. Der Mantel 16 des dritten Endabschnittes ist in diesem Ausführungsbeispiel mit einem Konus versehen, der eine verbesserte Anpassung an den als Führungsfläche dienenden, entsprechend zugeschnittenen Mantel 16 des ersten Endabschnittes 20 erlaubt.

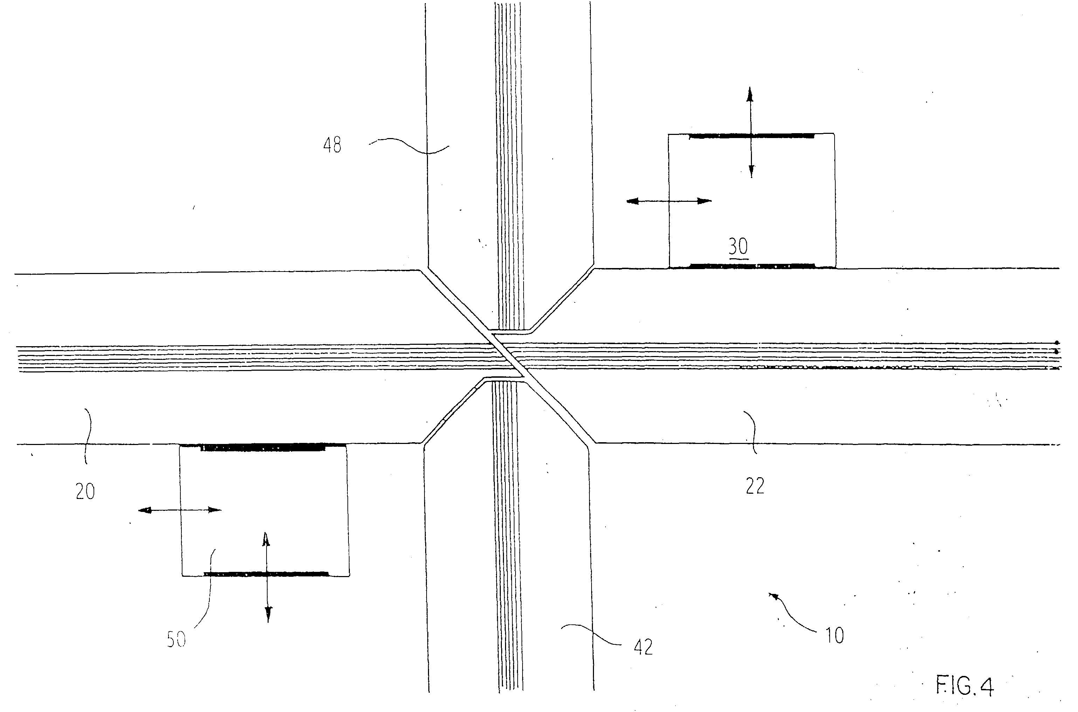

In Fig. 4 ist eine weitere Ausgestaltung des optischen Bauelementes 10 dargestellt. Es weist gegenüber der Ausgestaltung gemäß Fig. 3 einen zusätzlichen vierten Endabschnitt 48 und ein zusätzliches Stellelement 50 auf, dessen Ausgestaltung dem Stellelement 30 entspricht. Das optische Bauelement 10 gemäß Fig. 4 ist symmetrisch ausgebildet und erlaubt die Realisierung eines bidirektionalen Schalters. Der vierte Endabschnitt 48 wirkt als weitere Ankoppelfaser und ist entsprechend dem dritten Endabschnitt 42 gemäß Fig. 3 ausgebildet, wobei er jedoch nicht an dem ersten Endabschnitt 20, sondern an dem zweiten Endabschnitt 22 angebracht ist. Bei diesem Schalter ergibt sich somit der zusätzliche Strahlenweg von dem zweiten Endabschnitt 20 in den vierten Endabschnitt 48.

Nachdem in diesem Ausführungsbeispiel zusätzlich zu dem ersten Endabschnitt 20 oder den zweiten Endabschnitt 22 ein weiterer Endabschnitt 42 bzw. 48 bewegt werden muß, der sich zu dem querab erstreckt, erscheint es sinnvoll, das weitere piezoelektrische Stellelement 50 zu verwenden. Das Stellelement 50 wird bevorzugt synchron mit dem Stellelement 30 betätigt. Es erlaubt somit die Bereitstellung verdoppelter Stellkräfte, was in Anbetracht der erhöhten zu bewegenden Massen günstig ist.

Die Endabschnitte 42 und 48 sind bevorzugt im weiteren Verlauf gekrümmt, um die axiale Beweglichkeit zu erhöhen. Derartige optische Bauelemente können bevorzugt im Teilnehmeranschlußbereich als bidirektionale Schalter verwendet werden.

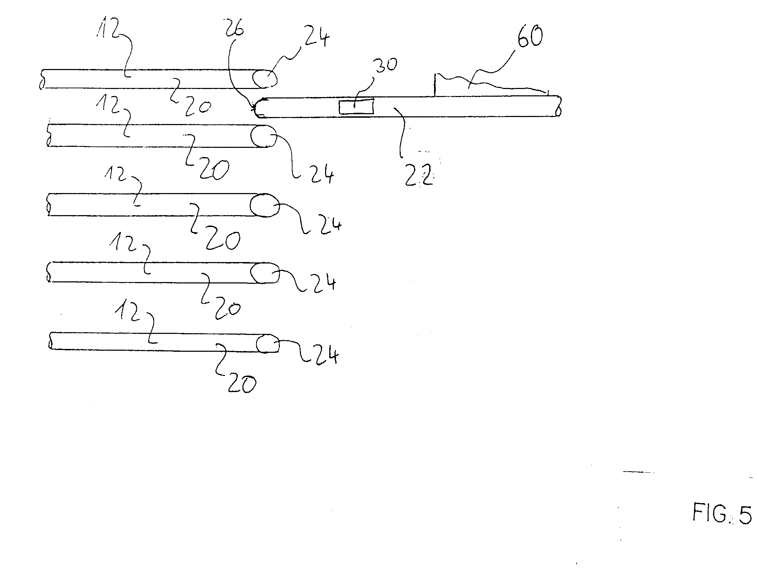

Gemäß der in Fig. 5 dargestellten weiteren Ausführungsform ist ein Multiplexbetrieb mit einer Mehrzahl von selektiv koppelbaren Lichtwellenleitern möglich. Hierzu ist ein weiteres piezoelektrisches Stellelement 60 vorgesehen, das in einer im wesentlichen zur Wirkung des Stellelements 30 senkrechten Richtung auf den beweglichen Endabschnitt 22 wirkt. Von dem Stellelement 60 ist in Fig. 5 lediglich ein Teil dargestellt. Der Bewegungsbereich des Stellelements 60 ist erheblich größer als der Stellweg des Stellelements 30. Auch wenn gemäß der Darstellung in Fig. 5 das Stellelement 60 unmittelbar auf den Lichtwellenleiter wirkend dargestellt ist, kann es auch auf den Befestigungsbereich des Stellelements 30 wirken. Die Lichtwellenleiter 20 weisen je Schrägflächen 24 auf, die im wesentlichen zueinander parallel sind, wobei auch eine kreisbogenförmige Anordnung möglich ist.

## Patentansprüche

1. Optisches Bauelement für die Beeinflussung von Durchlaßeigenschaften von Licht, mit mindestens zwei durch Lichtwellenleiter (12), die aus einer Glasfaser (18) und einem dieselbe umgebenden Mantel (16) bestehen, gebildeten Endabschnitten (20,22), wobei mindestens ein Endabschnitt zwischen zwei Endstellungen bewegbar ist, wobei in einer Endstellung die beiden Endabschnitte (20,22) optisch gekoppelt und in der anderen Endstellung optisch entkoppelt sind, bei welchem die Endabschnitte (20,22) einander zugewandte Schrägflächen (24,26) mit einem Winkel der Flächennormalen zur Achse der Glasfaser (18) aufweisen, der den Grenzwinkel der Totalreflexion überschreitet und bei welchem der Stellweg des beweglichen Endabschnitts (20,22) erheblich kleiner als der . Durchmesser der Glasfaser (18) ist, <u>dadurch gekennzeichnet,</u>

   - daß zumindest am bewegbaren Endabschnitt (20,22) im Bereich des beweglichen Endes desselben der Mantel (16) des Lichtwellenleiters (12) teilweise entfernt ist und
   - daß die Verstellung des bewegbaren Endabschnitts (20,22) quer zur Achse des Lichtwellenleiters (12) erfolgt und durch ein piezoelektrisches Stellelement (30) bewirkt wird.

2. Bauelement nach Anspruch 1, <u>dadurch gekennzeichnet,</u> daß das piezoelektrische Stellelement (30) ein vorzugsweise aus Quarz bestehender piezoelektrischer Kristall ist.

3. Bauelement nach Anspruch 1, <u>dadurch gekennzeichnet,</u> daß das piezoelektrische Stellelement (30) eine piezoelektrische Keramik ist.

4. Bauelement nach einem der Ansprüche 1 bis 3, <u>dadurch gekennzeichnet,</u> daß im Bereich des spitz zulaufenden Endes eines Endabschnitts (20) mit teilweise abgetragenem Mantel (16) ein dritter Endabschnitt (42) auf eine durch den Abtrag des Mantels (16) entstandene im wesentlichen zur Achse des ersten und zweiten Endabschnitts (20,22) parallele Fläche aufgesetzt ist, in welchen dritten Endabschnitt (42) bei optischer Entkopplung des ersten und zweiten Endabschnitts (20,22) die an der Schrägfläche (24) total reflektierte Strahlung einkoppelbar ist.

5. Bauelement nach Anspruch 4, <u>dadurch gekennzeichnet,</u>

   - daß der Mantel (16) bis auf eine Dicke von einigen µm abgetragen ist und
   - daß die Endfläche des dritten Endabschnitts (42) an eine Planfläche (44) angepaßt ist, wobei der dritte Endabschnitt (42) Teil eines Lichtwellenleiters (12) ist, der sich quer und insbesondere rechtwinklig zur Achse des ersten und zweiten Endabschnitts (20,22) erstreckt.

6. Bauelement nach Anspruch 4 oder 5, <u>dadurch gekennzeichnet,</u> daß an dem zweiten Endabschnitt (22) durch Abtrag des Mantels (16) des zugehörigen Lichtwellenleiters (12) eine Planfläche gebildet ist, auf die ein vierter Endabschnitt (48) mit einer Endfläche aufgesetzt ist.

## Claims

1. An optical element for affecting light transmission characteristics, comprising at least two end sections (20,22) of optical waveguides (12), which consist of a glass fiber (18) and a mantle (16) surrounding the same, at least one ofthe end sections being movable between two end positions, wherein the two end sections (20,22) are optically coupled in the one end position and decoupled in the other end position, wherein the end sections (20,22) have slanted end faces (24,26) facing each other with an angle of slant exceeding the critical angle of total reflection and wherein the displacement of the movable end section (20,22) is substantially smaller than the diameter of the glass fiber (18), **characterized in**

   - that at least on the movable end section (20,22) the mantle (16) of the optical waveguide (12) is removed at least partially in the area of its movable end and
   - that the displacement of the movable end section (20,22) is affected lateral to the axis of the optical waveguide (12) by a piezoelectric element (30).

2. Element according to claim 1, **characterized in** that the piezoelectric element (30) is a piezoelectric crystal, consisting of quartz preferably.

3. Element according to claim 1, **characterized in** that the piezoelectric element (30) is a piezoelectric ceramic.

4. Element according to one of the claims 1 to 3, **characterized in** that in the area of the slanted end of one of the end sections (20) in which the mantle (16) partially is removed a third end section (42) is provided, which abuts to a surface that is formed by removing the mantle (16) and which is substantially parallel to the axis of the first and second end section (20,22), the third end section (42) receiving a totally reflected light beam, when the first and second end section (20,22) are decoupled.

5. Element according to claim 4, **characterized in**

- that the mantl (16) is removed to a thickness of a few µm and
- that the end face of the third end section (42) is adapted to a planar surface (44), wherein the third end section (42) is a part of an optical waveguide (12), which extends lateral and preferably perpendicular to the axis of the first and second end section (20,22).

6. Element according to claim 4 or 5, **characterized in** that on the second and section (22) a planar surface is provided by removing the mantle (16) of the belonging optical waveguide (12), to which a fourth end section (48) abuts with its end surface.

**Revendications**

1. Composant optique permettant d'influencer les caractéristiques de transmission de la lumière avec au moins deux tronçons d'extrémité (20, 22) formés par des guides d'ondes lumineuses (12) composés d'une fibre optique (18) et d'une gaine (16) qui enrobe celle-ci, l'un au moins des tronçons d'extrémité est mobile entre deux positions extrêmes, dans l'une des positions extrêmes les deux tronçons d'extrémité (20, 22) sont couplés optiquement et dans l'autre position découplés, dans ladite position (20, 22) la normale aux surfaces obliques (24, 26) des tronçons d'extrémité tournées l'une vers l'autre forme avec l'axe de la fibre optique (18) un angle qui dépasse l'angle limite de réflexion totale et la distance de déplacement du tronçon mobile (20, 22) est nettement inférieure au diamètre de la fibre optique (18), caractérisé par le fait

- qu'au moins au niveau d'un des tronçons d'extrémité mobiles (20, 22) et au voisinage de l'extrémité mobile de celui-ci la gaine (16) du guide d'ondes lumineuses (12) est partiellement enlevée et

- que le déplacement du tronçon d'extrémité (20, 22) mobile se fait transversalement à l'axe du guide d'ondes lumineuses (12) et est provoqué par un élément de réglage piézo-électrique (30).

2. Composant selon la revendication 1 caractérisé par le fait que l'élément de réglage piézo-électrique (30) est de préférence un cristal piézo-électrique en quartz.

3. Composant selon la revendication 1 caractérisé par le fait que l'élément de réglage piézo-électrique (30) est de préférence une céramique piézo-électrique.

4. Composant selon les revendications 1 et 3, caractérisé par le fait qu'au voisinage de l'extrémité conique en pointe d'un tronçon d'extrémité (20) est ajouté sur une surface principalement parallèle à l'axe du premier et du deuxième tronçon d'extrémité (20, 22) et formée par l'enlèvement de la gaine (16), un troisième tronçon d'extrémité (42) dont la gaine (16) est partiellement enlevée, dans lequel troisième tronçon d'extrémité (42) on peut coupler le rayon totalement réfléchi par la surface oblique (24), lorsque le premier et le deuxième tronçon d'extrémité (20, 22) sont découplés.

5. Composant selon la revendication 4, caractérisé par le fait

- que la gaine (16) est enlevée sur une épaisseur de quelques µm et

- que la surface d'extrémité du troisième tronçon d'extrémité (42) est adaptée à une surface plane (44) et que le troisième tronçon d'extrémité (42) est une partie d'un guide d'ondes lumineuses (12) qui se présente transversalement et plus particulièrement perpendiculairement à l'axe du premier et du deuxième tronçon d'extrémité (20, 22)

6. Composant selon les revendications 4 ou 5, caractérisé par le fait qu'un surface plane est formée sur le deuxième tronçon d'extrémité (22) par enlèvement de la gaine (16) du guide d'ondes lumineuses correspondant (12) sur laquelle est ajouté un quatrième tronçon d'extrémité (48) avec une surface d'extrémité.

FIG. 1

EP 0 592 902 B1

FIG. 2

EP 0 592 902 B1

FIG. 3

FIG. 4

FIG. 5